# EUROPEAN PATENT SPECIFICATION

(11) **EP 2 887 429 B1**
(45) Date of publication and mention of the grant of the patent: **06.04.2016**
(21) Application number: 14167283.2
(22) Date of filing: 07.05.2014
(51) Int. Cl.: H01M 2/30, H01M 2/20, H01M 2/26, H01M 4/64

(54) **Secondary battery and secondary battery module**
Sekundärbatterie und Sekundärbatteriemodul
Batterie secondaire et module de batterie secondaire

(30) Priority: 23.12.2013 KR 20130161773
(43) Date of publication of application: 24.06.2015
(73) Proprietor: Samsung SDI Co., Ltd., Yongin-si, Gyeonggi-do (KR)
(72) Inventor: Lee, Hyun-Soo, Yongin-si, Gyeonggi-do (KR); Song, Jang-Hyun, Yongin-si, Gyeonggi-do (KR); Jang, Myung-Jae, Yongin-si, Gyeonggi-do (KR)
(74) Representative: Ludwig, Ingo

(56) References cited:
- EP-A1- 2 312 674
- EP-A1- 2 312 675
- EP-A1- 2 410 595
- EP-A2- 2 372 814
- US-A1- 2011 311 863

## Description

### BACKGROUND

### 1. Field

The present invention relates to a secondary battery comprising an electrode assembly and a terminal that is electrically connected to the electrode assembly, wherein the terminal is provided with a terminal plate, which comprises a first part and a second part, wherein the first part is formed of a first material and the second part is formed of a second material that differs from the first material, and wherein an insulator is arranged between the terminal plate and a cap plate of the battery. Furthermore, the invention relates to a secondary battery module comprising a plurality of secondary batteries, wherein one terminal of one of the batteries is connected one terminal of an another one of the batteries that is adjacent to the one of the batteries by a bus bar.

### 2. Description of the Related Art

Unlike primary batteries, secondary batteries are rechargeable, and the use of second batteries is encouraged owing to economical and eco-friendly aspects thereof. Secondary batteries are e.g. disclosed in EP 2 372 814 A2, EP2 410 595 A1, EP 2 312 675 A1, US 2011/0311863 A1 and EP 2 312 674 A1.

Securely connecting the terminal to the electrode assembly and to contact elements like the bus bar by welding is often difficult due to welding properties of the materials that are to be interconnected.

Hence, it is an object of the invention to provide a secondary battery and a secondary battery module, whose producability is facilitated and in particular wherein the terminal can easily connected to a contact element, e.g. to a bus bar, and to the electrode assembly by welding.

### SUMMARY

The object is achieved according to the invention and for the secondary battery in that a gap is formed between the terminal plate and the insulator. For the secondary battery module, the object is achieved according to the invention in that at least one of the batteries is a battery according to the invention.

The first and the second material may be chosen based on their respective welding properties in order to facilitate welding of the terminal to the contact element and to the electrode assembly, e.g. when assembling the battery. Interconnecting the first and the second parts may be performed before assembling the battery starts without affecting the assembling of the battery starts.

The solutions according to the invention can be combined as desired and further improved by the following embodiments that are advantageous on their own, in each case.

In particular, the material of the second part may be chosen to facilitate welding the second part to the contact element. The second part material and the contact element material may therefore be similar or same materials.

The first part and the second part may at least sectionwise abut a contact plane. The contact plane may be a common contact plane of the first and the second parts and may serve as a rest for the contact element, e.g. the bus bar. Hence, no protruding parts of the terminal plate obstruct the placement of the contact element onto the terminal plate prior to welding the contact element to the terminal plate. The contact element can abut the contact plane extensively, providing for a good welding and electrical contact.

The terminal plate is preferably formed continuously, i.e. as a single part, of the first and the second parts in order to minimize internal electrical resistance of the terminal plate.

Furthermore, the insulator is arranged between the terminal plate and a cap plate of the battery in order to avoid an unintended electrical contact between the terminal plate and the cap plate. The gap is formed between the terminal plate and the insulator, such that heat caused by welding of the contact element precisely to the terminal plate can be dissipated and does not overheat the insulator.

The second part can comprise a guide element, against which the contact element can be placed before welding the contact element to the terminal plate. Thus, the welding position of the other contact element can be predetermined by the guide element that can act as a stop for the contact element at least in one direction. A precise positioning of the contact element is thus facilitated.

The second part may comprise the guide element and a protrusion that is provided at a distance from the guide element, the guide element and the protrusion extending in the same direction. The guide element and the protrusion thus restrict movements of the contact element in two opposite directions and form a positioning channel for the contact element, hence further facilitate placing the contact element precisely onto the terminal plate.

The guide element and the protrusion are preferably formed of the same material, e. g. the second material, such that the second part can be easily formed as a single part, e.g. completely of the second material and for instance by milling or stamping and bending.

The terminal may comprise a collector that interconnects the terminal plate and the electrode assembly. The first part of the terminal plate and the collector may be formed of the same material, such that the first part and the collector can be easily formed as a single part, e.g. completely of the second material and for instance by stamping and bending. Furthermore, the first part may be affixed to the collector, for instance by welding.

The collector material may be chosen to facilitate welding of the collector to an electrode of the electrode assembly. In particular, the collector and the electrode may be formed of similar or same materials.

The battery can comprise another terminal, whose terminal plate is formed of and may even be formed completely or consist of the first material. This other terminal can be easily formed as a single part, e.g. completely of one material and for instance by stamping and bending, and may be easily weldable to the electrode assembly and in particular to another electrode of the electrode assembly as the terminal mentioned before and to another contact element.

An insulator, e. g. another insulator, may be arranged between the other terminal plate and the cap plate of the battery in order to avoid an unintended electrical contact between the other terminal plate and the cap plate. A gap may be formed between the other terminal plate and the insulator, such that heat caused by welding of another contact element to the other terminal plate can be dissipated and does not overheat the insulator.

The terminal plate of the other terminal comprises a guide element, against which the other contact element can be placed before welding the other contact element to the other terminal plate. Thus, the welding position of the other contact element can be predetermined by the guide element that can act as a stop for the other contact element at least in one direction. A precise positioning of the other contact element is thus facilitated

The terminal plate of the other terminal can comprise the guide element and a protrusion that is provided at a distance from the guide element, the guide element and the protrusion extending in the same direction. The guide element and the protrusion thus restrict movements of the other contact element in two opposite directions and form a positioning channel for the other contact element, hence further facilitate placing the other contact element precisely onto the terminal plate.

The guide element and the protrusion are preferably formed of the same material, such that the other terminal with the guide element and the protrusion can be easily formed as a single part, e.g. completely of one material and for instance by milling or stamping and bending.

Furthermore, the other terminal may comprise a collector, e. g. another collector that interconnects the terminal plate and the electrode assembly, wherein the terminal plate and the collector are formed of the same material, such that the terminal plate of the other terminal and the collector can be easily formed as a single part, e.g. completely of one material and for instance by milling or stamping and bending. Moreover, the terminal plate may be affixed to the collector, for instance by welding.

The collector material may be chosen to facilitate welding of the collector to an electrode and for instance to another electrode of the electrode assembly. In particular, the collector an the electrode may be formed of similar or same materials.

The contact element, e.g. the bus bar, may be formed of the first material, which is chosen to be easily welded to the first part of the terminal and to the terminal plate of the other terminal, the terminal plate preferably being formed or even consisting of the first material.

Aspects of the invention are set forth in other words in the following description:
In particular, the terms first and second are used in the following in order to distinguish different items instead of using the term other above. The terms first and second, however, are merely used to distinguish different items of the battery and of the battery module and do not represent an order or sequence of the items and do not require the existence another one of the items.

According to one or more embodiments of the present invention, a secondary battery may include: an electrode assembly including a first electrode plate, a second electrode plate, and a separator between the first and second electrode plates; a case accommodating the electrode assembly; a cap plate sealing the case; and a first terminal and a second terminal that are coupled to the cap plate. The first terminal may include a first terminal plate electrically connected to the first electrode plate and formed of a first material, the first terminal having a flat shape. The second terminal can include a second terminal plate electrically connected to the second electrode plate and having a flat shape, the second terminal plate including a first part and a second part, the first part being formed of a second material different from the first material, the second part being formed continuously from the first part and formed of the first material.

A first insulator may be provided between the first terminal plate and the cap plate, and a first gap may be formed between the first insulator and the first terminal plate.

The first terminal may further include a first collector preferably formed in one piece with the first terminal plate, the first collector penetrating the first insulator and being joined to the first electrode plate, and the first electrode plate and the first collector may be formed of the first material.

The first terminal plate may include a first guide formed by bending an end portion thereof.

The first terminal plate may further include a first protrusion protruding outward from a top surface of the first terminal plate, the first protrusion being spaced apart from the first guide and parallel with the first guide.

A second insulator may be provided between the second terminal plate and the cap plate, and a second gap may be formed between the second insulator and the second terminal plate.

The second terminal may further include a second collector preferably formed in one piece with the first part, the second collector penetrating the second insulator and being joined to the second electrode plate, and the second electrode plate and the second collector may be formed of the second material.

The second part may include a second guide formed by bending an end portion thereof.

The second part may further include a second protrusion protruding outward from a top surface of the second part, the second protrusion being spaced apart from the second guide and parallel with the second guide.

According to one or more embodiments of the present invention, a secondary battery module can include: a plurality of secondary batteries arranged in one direction and parallel with each other; and at least one or even a plurality of bus bars, each electrically connecting two of the plurality of secondary batteries, wherein each of the plurality of secondary batteries may include: an electrode assembly including a first electrode plate, a second electrode plate, and a separator between the first and second electrode plates; a case accommodating the electrode assembly; a cap plate sealing the case; and a first terminal and a second terminal. The first terminal may include a first terminal plate electrically connected to the first electrode plate and formed of a first material, the first terminal plate having a flat shape The second terminal can include a second terminal plate electrically connected to the second electrode plate and having a flat shape, the second terminal plate including a first part and a second part, the first part being formed of a second material different from the first material, the second part being formed continuously from the first part and formed of the first material. The at least one or even the plurality of bus bars may be formed or even consist of the first material, each of the plurality of bus bars being joined to the first terminal plate and the second part of a pair of neighboring secondary batteries of the plurality of secondary batteries.

A first insulator may be included between the first terminal plate and the cap plate, and a second insulator may be included between the second terminal plate and the cap plate, wherein a first gap may be formed between the first insulator and the first terminal plate, and a second gap may be formed between the second insulator and the second terminal plate.

The first gap and the second gap may each be overlapped with one of the bus bars. Thus, projections of each of the gaps and the nearest bus bar in a direction in which each of the terminal plate is arranged behind or before the nearest bus bar may intersect each other.

The first terminal may further include a first collector preferably formed in one piece with the first terminal plate, the first collector penetrating the first insulator and being joined to the first electrode plate, the first electrode plate and the first collector preferably being formed of the first material. The second terminal may further include a second collector preferably formed in one piece with the first part, the second collector penetrating the second insulator and being joined to the second electrode plate, the second electrode plate and the second collector preferably being formed of the second material.

The first terminal plate may include a first guide preferably formed by bending an end portion thereof, the first guide making contact with a bus bar, and a boundary line between the first guide and the bus bar may form a welding line.

The first terminal plate may further include a first protrusion protruding outward from a top surface of the first terminal plate, hence away from the cap plate, and the bus bar may be disposed between the first protrusion and the first guide.

The first protrusion, the first guide, and the bus bar may have the same height.

The second part may comprise a second guide formed by bending an end portion thereof, the second guide making contact with a bus bar, and a boundary line between the second guide and the bus bar may form a welding line.

The second part may further include a second protrusion protruding outward from a top surface of the second part, hence away from the cap plate, and the bus bar may be disposed between the second protrusion and the second guide.

The second protrusion, the second guide, and the bus bar may have the same height.

The first material may include aluminum, and the second material may include copper.

The invention is described hereinafter in more detail and in an exemplary manner using advantageous embodiments and with reference to the schematic drawings. The embodiments are merely possible configurations in which, however, the individual features as described above can be provided independently of one another and can be omitted in the drawings.

### BRIEF DESCRIPTION OF THE DRAWINGS

These and/or other aspects will become apparent and more readily appreciated from the following description of the embodiments, taken in conjunction with the accompanying drawings in which:
FIG. 1 is a schematic perspective view illustrating a secondary battery module according to an embodiment of the present invention;
FIG. 2 is a schematic perspective view illustrating a secondary battery depicted in FIG. 1;
FIG. 3 is a cross-sectional view taken along line I-I of FIG. 2;
FIG. 4 is a schematic perspective view illustrating an electrode assembly depicted in FIG. 3;
FIG. 5 is a schematic perspective view illustrating a portion of the secondary battery module depicted in FIG. 1;
FIG. 6 is a schematic perspective view illustrating a modification example of a secondary battery depicted in FIG. 1; and
FIG. 7 is a schematic perspective view illustrating a portion of a secondary battery module including the secondary battery depicted in FIG. 6, according to another embodiment of the present invention.

### DETAILED DESCRIPTION

Reference will now be made in detail to embodiments, examples of which are illustrated in the accompanying drawings. In the descriptions of the embodiments, like reference numerals denote like elements. The in the following used terms first and second are used in order to distinguish different items instead of using the term other above. The terms first and second, however, are merely used to distinguish different items of the battery and of the battery module and do not represent an order or sequence of the items and do not require the existence of the respective other one of the items.

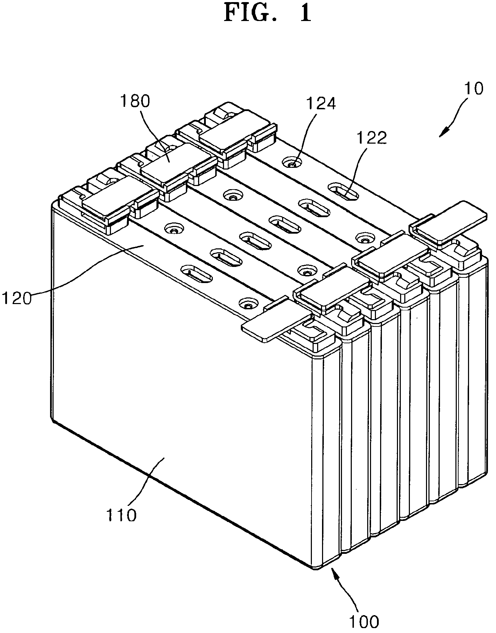

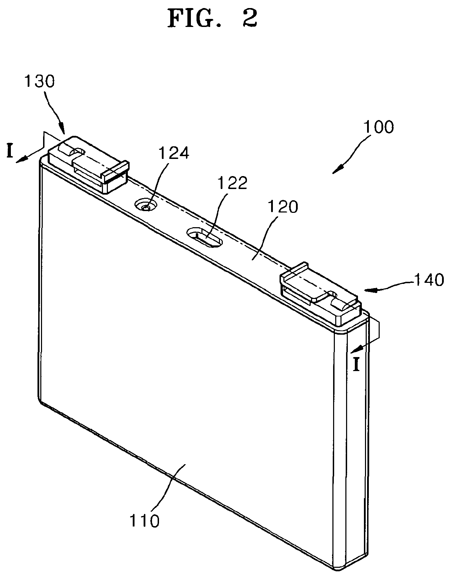

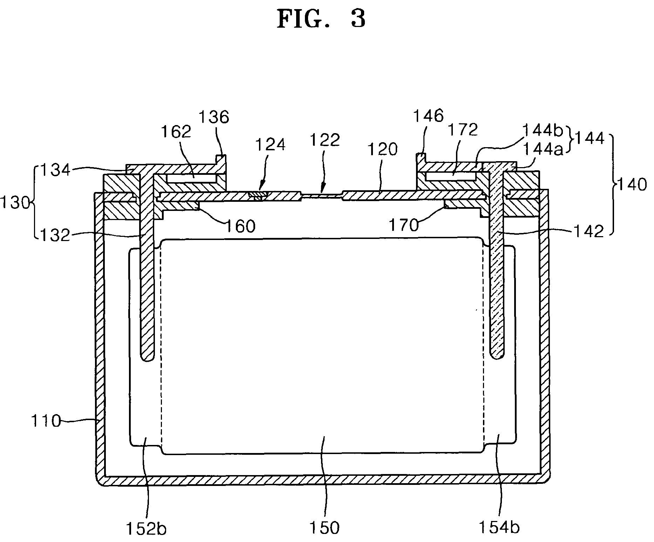

Referring to FIGS. 1 to 5, the secondary battery module 10 may include a plurality of secondary batteries 100 arranged in one direction and parallel with each other, and a plurality of bus bars 180 electrically connecting the plurality of secondary batteries 100.

Each of the plurality of secondary batteries 100 may include an electrode assembly 150, a case 110 accommodating the electrode assembly 150, a cap plate 120 sealing the case 110, and a first terminal 130 and a second terminal 140 coupled to the cap plate 120. In addition, each of the secondary batteries 100 may further include a first insulator 160 between the cap plate 120 and the first terminal 130 and a second insulator 170 between the cap plate 120 and the second terminal 140.

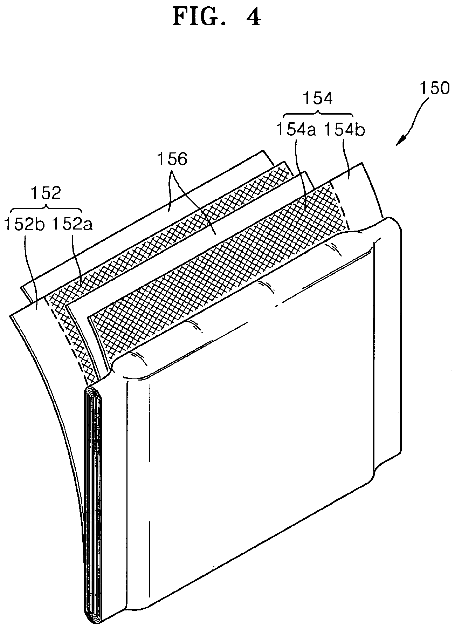

The electrode assembly 150 may include a first electrode plate 152, a second electrode plate 154, and a separator 156 disposed between the first electrode plate 152 and the second electrode plate 154. For example, as shown in FIG. 4, the electrode assembly 150 may be formed in the shape of a jelly roll by sequentially stacking and winding the first electrode plate 152, the separator 156, and the second electrode plate 154. Alternatively, the electrode assembly 150 may be formed by stacking first electrode plates 152, separators 156, and the second electrode plates 154 a plurality of times.

The first electrode plate 152 may include a first active material portion 152a coated with a first active material, and a first non-coating portion 152b not coated with the first active material. For example, the first active material portion 152a may be formed by partially coating at least one side of an aluminum plate with the first active material, and the other portion of the aluminum plate not coated with the first active material may become the first non-coating portion 152b. The first active material may be a positive electrode active material, and the positive electrode active material may be a lithium-containing transition metal oxide such as LiCoO2, LiNiO2, LiMnO2, or LiMnO4, or a lithium chalcogenide.

The second electrode plate 154 may include a second active material portion 154a coated with a second active material, and a second non-coating portion 154b not coated with the second active material. For example, the second active material portion 154a may be formed by partially coating at least one side of a copper plate with the second active material, and the other portion of the copper plate not coated with the second active material may become the second non-coating portion 154b. For example, the second active material may be a negative electrode active material, and the negative electrode active material may be a carbon material such as crystalline carbon, amorphous carbon, a carbon composite, or carbon fiber, a lithium metal, or a lithium alloy.

For example, the separator 156 may be formed by coating a base film with a co-polymer of polyvinylidene fluoride and hexafluoro propylene (PVDF-HFP co-polymer). The base film may be one selected from the group consisting of co-polymers of polyethylene (PE), polystyrene (PS), polypropylene (PP) and polyethylene (PE), and polypropylene (PP). However, the separator 156 is not limited thereto.

When the first electrode plate 152, the separator 156, and the second electrode plate 154 are wound, the first electrode plate 152 and the second electrode plate 154 may be oppositely disposed with respect to the separator 156 to place the first non-coating portion 152b at an end of the electrode assembly 150 and the second non-coating portion 154b at the other end of the electrode assembly 150. That is, the first non-coating portion 152b and the second non-coating portion 154b may be disposed at opposite edges of the width of the electrode assembly 150.

An opening is formed in an upper side of the case 110 to insert the electrode assembly 150 into the case 110 therethrough. The case 110 is formed of a conductive material such as aluminum or aluminum alloy. The case 110 may protect the electrode assembly 150 from external shocks, and during charging and discharging operations of the electrode assembly 150, the case 110 may function as a heat-dissipation element to dissipate heat generated from the electrode assembly 150 to the outside.

The cap plate 120 may be formed of the same material as that used to form the case 110. After the electrode assembly 150 is disposed in the case 110, the cap plate 120 may be placed on a side of the case 110 and joined to the case 110 by a method such as welding so as to seal the case 110.

The cap plate 120 may include a safety vent 122. If the inside pressure of the case 110 becomes excessively high, the safety vent 122 may be broken to release gas from the inside of the case 110.

The cap plate 120 may include an electrolyte inlet 124. After the cap plate 120 is coupled to the case 110, electrolyte may be injected into the case 110 through the electrolyte inlet 124, and then the electrolyte inlet 124 may be closed.

The first terminal 130 is preferably electrically connected to the first electrode plate 152, and the second terminal 140 electrically is preferably connected to the second electrode plate 154 may be coupled to the cap plate 120. In addition, the first insulator 160 may be disposed between the cap plate 120 and the first terminal 130, and the second insulator 170 may be disposed between the cap plate 120 and the second terminal 140.

The first terminal 130 may include a first collector 132 and a first terminal plate 134, and the first terminal plate 134 may have a flat shape and is preferably formed in one piece with the first collector 132. The first terminal 130 may be formed of a first material. For example, the first material may be aluminum used to form the first electrode plate 152.

The first collector 132 penetrates the first insulator 160 and is joined to the first non-coating portion 152b by a method such as welding. Since both, the first collector 132 and the first non-coating portion 152b may be formed of aluminum, the first collector 132 and the first non-coating portion 152b may be welded together with a high bonding strength because the welding is performed on parts formed of the same material.

The first terminal plate 134 to which a bus bar 180 will be joined may include a first guide element 136 formed by bending an end portion thereof. The first guide element 136 may guide the position of the bus bar 180, and since a boundary line between the first guide element 136 and the bus bar 180 forms a welding line as described later, a welding position may be determined by the first guide element 136.

The first insulator 160 insulates the first terminal 130 from the cap plate 120 and the case 110. A region of the first insulator 160 may include a first gap 162, e.g. formed by a recess, between the first insulator 160 and the first terminal plate 134.

As described later, the first gap 162 is overlapped with the bus bar 180 placed on the first terminal plate 134, and thus heat transfer toward the cap plate 120 and thermal deformation of the first insulator 160 may be prevented when the first terminal plate 134 and the bus bar 180 are welded together.

The second terminal 140 may include a second collector 142 and a second terminal plate 144, and the second terminal plate 144 may have a flat shape and formed in one piece with the second collector 142. The second terminal plate 144 may include a first part 144a and a second part 144b that are formed of different materials. The first part 144a and the second collector 142 may be formed of a second material, and the second part 144b may be formed of the first material used to form the first terminal 130. For example, the first material may be aluminum, and the second material may be copper.

The second collector 142 may penetrate the second insulator 170 insulating the second terminal 140 from the cap plate 120 and the case 110, and may then be joined to the second non-coating portion 154b by welding. Since both the second collector 142 and the second non-coating portion 154b may be formed of copper, the second collector 142 and the second non-coating portion 154b may be welded together with a high bonding strength because the welding is performed on parts formed of the same material.

The first part 144a is formed continuously from the second part 144b, and a bus bar 180 is joined to the second part 144b. The second part 144b may include a second guide element 146 preferably formed by bending an end portion thereof. The second guide element 146 may guide the position of the bus bar 180, and since a boundary line between the second guide element 146 and the bus bar 180 forms a welding line as described later, a welding position may be determined by the second guide element 146.

The second insulator 170 insulates the second terminal 140 from the cap plate 120 and the case 110. A region of the second insulator 170 may include a second gap 172, e.g. formed by a recess, partially between the second insulator 170 and the second terminal plate 144. The second gap 172 may be overlapped with the bus bar 180 placed on the second terminal plate 144, and thus heat transfer toward the cap plate 120 and thermal deformation of the second insulator 170 may be prevented when the second terminal plate 144 and the bus bar 180 are welded together.

The bus bar 180 electrically connects the secondary batteries 100 by connecting the first terminals 130 and the second terminals 140 of the secondary batteries 100 adjacent to each other. In detail, one bus bar 180 is joined to a first terminal plate 134 and a second part 144b of a pair of neighboring secondary batteries 100 of the secondary batteries 100 by a method such as welding.

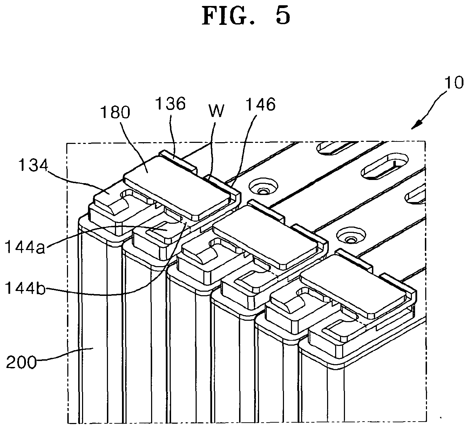

As shown in FIG. 5, one bus bar 180 is brought into contact with the first guide element 136 of the first terminal plate 134 and the second guide element 146 of the second part 144b, and in this state, the bus bar 180 is welded so that a straight welding line W may be formed along a boundary line between the bus bar 180 and the first guide element 136 and a boundary line between the bus bar 180 and the second guide element 146.

The heights of the first guide element 136 and the second guide element 146 may be equal to the thickness of the bus bar 180. That is, the top surface of the bus bar 180 may be aligned with the top surfaces of the first and second guide elements 136 and 146 along the same line, and in this state, the bus bar 180 may be welded. The top surfaces are preferably surfaces that face away from the electrode assembly or the cap plate. Therefore, as compared with the case in which the bus bar 180 is welded after being superposed on the first terminal plate 134 or the second terminal plate 144, the bus bar 180 may be welded more easily and with less power, for instance of a welding laser.

In addition, as described above, since all of the bus bar 180, the first terminal plate 134, and the second part 144b may be formed of the first material (that is, aluminum), the bus bar 180 may be welded to the first terminal plate 134 and the second part 144b with a high bonding strength because the welding is performed on parts formed of the same material. In addition, since welding is performed on aluminum more easily than copper, the weldability between the bus bar 180 and the first terminal plate 134 and the weldability between the bus bar 180 and the second part 144b may be improved.

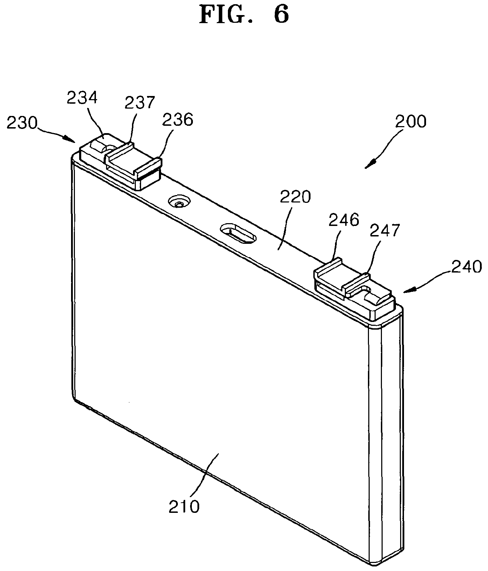

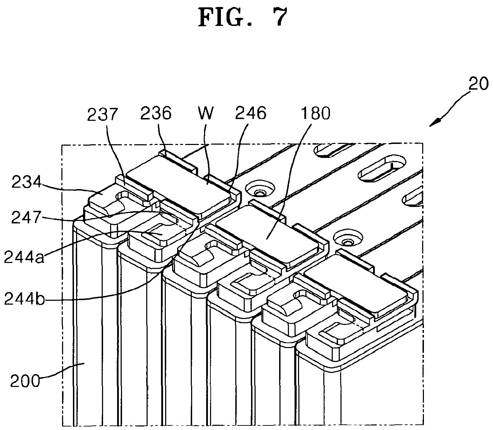

FIG. 6 is a schematic perspective view illustrating another exemplary embodiment of the secondary battery and FIG. 7 is a schematic perspective view illustrating a portion of a secondary battery module 20 including secondary batteries such as that depicted in FIG. 6.

First, referring to FIG. 6, the secondary battery 200 may include a case 210 accommodating an electrode assembly (not shown), a cap plate 220 sealing the case 210, and a first terminal 230 and a second terminal 240 coupled to the cap plate 220.

The case 210 and the cap plate 220 have the same structures as the case 110 and the cap plate 120 described with reference to FIGS. 1 to 5. Thus, descriptions thereof will not be repeated for the sake of brevity.

The first terminal 230 includes a first terminal plate 234, and the first terminal plate 234 includes a first guide element 236 preferably formed by bending an end portion thereof. In addition, the first terminal plate 234 may further include a first protrusion 237. The first protrusion 237 protrudes outward from the top surface of the first terminal plate 234, i.e. away from the cap plate 220, and is spaced apart from the first guide element 236 and parallel with the first guide element 236.

The first protrusion 237 and the first terminal plate 234 may be formed in one piece by using the first material. The first protrusion 237 and the first guide element 236 may have the same height.

The second terminal 240 includes a first part 244a and a second part 244b that may be continuously formed. The first part 244a may be formed of the second material (e. g. copper), and the second part 244b may be formed of the first material (e. g. aluminum) used to form the first terminal 230.

The second part 244b preferably includes a second guide element 246 that may be formed by bending an end portion thereof. In addition, the second part 244b may further include a second protrusion 247 protruding outward from the top surface of the second part 244b, i.e. away from the cap plate 220, and being spaced apart from the second guide element 246 in parallel with the second guide element 246. The second protrusion 247 and the second part 244b may be formed in one piece by using the first material, and the second protrusion 247 and the second guide element 246 may have the same height.

FIG. 7 illustrates the secondary battery module 20 in which the secondary batteries 200 are connected through bus bars 180.

Referring to FIG. 7, a side of one of the bus bars 180 is disposed between the first protrusion 237 and the first guide element 236 of a secondary battery 200, and the other side of the bus bar 180 is disposed between the second protrusion 247 and the second guide element 246 of a neighboring secondary battery 200. In this state, the bus bar 180 is welded to form straight welding lines W along boundary lines among the bus bar 180, the first protrusion 237, the first guide element 236, the second protrusion 247, and the second guide element 246.

When the bus bar 180 is welded, the first protrusion 237, the first guide element 236, the second protrusion 247, and the second guide element 246 may define an assembling position of the bus bar 180 and may prevent the bus bar 180 from separating from the assembling position. Therefore, the efficiency of the welding process may be improved.

In addition, since all of the first protrusion 237, the first guide element 236, the second protrusion 247, and the second protrusion 247 are formed of the same material as that used to form the bus bar 180, high bonding strength may be guaranteed therebetween.

In addition, the first protrusion 237, the first guide element 236, the second protrusion 247, the second protrusion 247, and the bus bar 180 have the same height and are welded along straight lines in a state that the top surfaces thereof are aligned, the welding process may be easily performed.

As described above, according to one or more of the above embodiments of the present invention, when the bus bars are joined to the secondary batteries, the positions of the bus bars correspond to predetermined positions, and the bonding strength between the bus bars and the secondary batteries may be high.

## Claims

1. A secondary battery (100) comprising an electrode assembly (150) and a terminal (140) that is electrically connected to the electrode assembly (150), wherein the terminal (140) is provided with a terminal plate (144), which comprises a first part (144a) and a second part (144b), wherein the first part (144a) is formed of a first material and the second part (144b) is formed of a second material that differs from the first material, and wherein an insulator (170) is arranged between the terminal plate (144) and a cap plate (120) of the battery (100), **characterized in that** a gap (172) is formed between the terminal plate (144) and the insulator (170).

2. The secondary battery (100) of claim 1, **characterized in that** the first part (144a) and the second part (144b) at least sectionwise abut a contact plane.

3. The secondary battery (100) of claim 1 or 2, **characterized in that** the second part (144b) comprises a guide element (146).

4. The secondary battery (200) of claim 3, **characterized in that** the second part (244b) comprises the guide element (246) and a protrusion (247) that is provided at a distance from the guide element (246), the guide element (246) and the protrusion (247) extending in the same direction.

5. The secondary battery (200) of claim 4, **characterized in that** the guide element (246) and the protrusion (247) are formed of the same material.

6. The secondary battery (100) of any of claims 1 to 5, **characterized in that** the terminal (140) comprises a collector (142) that interconnects the terminal plate (144) and the electrode assembly (150), wherein the first part (144a) of the terminal plate (144) and the collector (142) are formed of the same material.

7. The secondary battery (100) of any of claims 1 to 6, **characterized in that** the battery (100) comprises another terminal (130), whose terminal plate (134) is formed of the first material.

8. The secondary battery (100) of claim 7, **characterized in that** an insulator (160) is arranged between the other terminal plate (134) and the cap plate (120) of the battery (100), wherein a gap (162) is formed between the other terminal plate (134) and the insulator (160).

9. The secondary battery (100) of claim 7 or 8, **characterized in that** the terminal plate (134) of the other terminal (130) comprises a guide element (136).

10. The secondary battery (200) of claim 9, **characterized in that** the terminal plate (234) of the other terminal (230) comprises the guide element (236) and a protrusion (237) that is provided at a distance from the guide element (236), the guide element (236) and the protrusion (237) extending in the same direction.

11. The secondary battery (200) of claim 10, **characterized in that** the other terminal (230), the guide element (236) and the protrusion (237) are formed of the same material.

12. The secondary battery (100) of any of claims 7 to 11, **characterized in that** the other terminal (130) comprises a collector (132) that interconnects the terminal plate (134) and the electrode assembly (150), wherein the terminal plate (134) and the collector (132) are formed of the same material.

13. A secondary battery module (10) comprising a plurality of secondary batteries (100, 200), wherein one terminal (130, 140, 230, 240) of one of the secondary batteries (100, 200) is connected one terminal (130, 140, 230, 240) of an another one of the secondary batteries (100, 200) that is adjacent to the one of the secondary batteries (100, 200) by a bus bar (180), **characterized in that** at least one of the secondary batteries (100, 200) is a secondary battery of any of claims 1 to 13.

14. The secondary battery module (10) of claim 13, **characterized in that** the bus bar (180) is formed of the first material.

## Patentansprüche

1. Eine Sekundärbatterie (100), umfassend eine Elektrodenanordnung (150) und einen Anschluss (140), der mit der Elektrodenanordnung (150) elektrisch verbunden ist, wobei der Anschluss (140) mit einer Anschlussplatte (144) ausgestattet ist, die einen ersten Teil (144a) und einen zweiten Teil (144b) umfasst, wobei der erste Teil (144a) aus einem ersten Material gebildet ist und der zweite Teil (144b) aus einem zweiten Material gebildet ist, das sich von dem ersten Material unterscheidet, und wobei ein Isolator (170) zwischen der Anschlussplatte (144) und einer Deckplatte (120) der Batterie (100) angeordnet ist, **dadurch gekennzeichnet, dass** eine Lücke (172) zwischen der Anschlussplatte (144) und dem Isolator (170) gebildet ist.

2. Die Sekundärbatterie (100) des Anspruchs 1, **dadurch gekennzeichnet, dass** der erste Teil (144a) und der zweite Teil (144b) mindestens abschnittsweise an eine Kontaktebene angrenzen.

3. Die Sekundärbatterie (100) des Anspruchs 1 oder 2, **dadurch gekennzeichnet, dass** der zweite Teil (144b) ein Führungselement (146) umfasst.

4. Die Sekundärbatterie (200) des Anspruchs 3, **dadurch gekennzeichnet, dass** der zweite Teil (244b) das Führungselement (246) und einen Vorsprung (247) umfasst, der in einem Abstand von dem Führungselement (246) vorgesehen ist, wobei das Führungselement (246) und der Vorsprung (247) sich in der gleichen Richtung erstrecken.

5. Die Sekundärbatterie (200) des Anspruchs 4, **dadurch gekennzeichnet, dass** das Führungselement (246) und der Vorsprung (247) aus dem gleichen Material gebildet sind.

6. Die Sekundärbatterie (100) eines der Ansprüche 1 bis 5, **dadurch gekennzeichnet, dass** der Anschluss (140) einen Kollektor (142) umfasst, der die Anschlussplatte (144) und die Elektrodenbaugruppe (150) miteinander verbindet, wobei der erste Teil (144a) der Anschlussplatte (144) und der Kollektor (142) aus dem gleichen Material gebildet sind.

7. Die Sekundärbatterie (100) eines der Ansprüche 1 bis 6, **dadurch gekennzeichnet, dass** die Batterie (100) einen anderen Anschluss (130) umfasst, dessen Anschlussplatte (134) aus dem ersten Material gebildet ist.

8. Die Sekundärbatterie (100) des Anspruchs 7, **dadurch gekennzeichnet, dass** ein Isolator (160) zwischen der anderen Anschlussplatte (134) und der Deckplatte (120) der Batterie (100) angeordnet ist, wobei eine Lücke (162) zwischen der anderen Anschlussplatte (134) und dem Isolator (160) gebildet ist.

9. Die Sekundärbatterie (100) des Anspruchs 7 oder 8, **dadurch gekennzeichnet, dass** die Anschlussplatte (134) des anderen Anschlusses (130) ein Führungselement (136) umfasst.

10. Die Sekundärbatterie (200) des Anspruchs 9, **dadurch gekennzeichnet, dass** die Anschlussplatte (234) des anderen Anschlusses (230) das Führungselement (236) und einen Vorsprung (237) umfasst, der in einem Abstand von dem Führungselement (236) vorgesehen ist, wobei das Führungselement (236) und der Vorsprung (237) sich in der gleichen Richtung erstrecken.

11. Die Sekundärbatterie (200) des Anspruchs 10, **dadurch gekennzeichnet, dass** der andere Anschluss (230), das Führungselement (236) und der Vorsprung (237) aus dem gleichen Material gebildet sind.

12. Die Sekundärbatterie (100) eines der Ansprüche 7 bis 11, **dadurch gekennzeichnet, dass** der andere Anschluss (130) einen Kollektor (132) umfasst, der die Anschlussplatte (134) und die Elektrodenanordnung (150) miteinander verbindet, wobei die Anschlussplatte (134) und der Kollektor (132) aus dem gleichen Material gebildet sind.

13. Ein Sekundärbatteriemodul (10), das mehrere Sekundärbatterien (100, 200) umfasst, wobei ein Anschluss (130, 140, 230, 240) von einer der Sekundärbatterien (100, 200) mit einem Anschluss (130, 140, 230, 240) von einer anderen der Sekundärbatterien (100, 200), die an die eine der Sekundärbatterien (100, 200) angrenzt, durch eine Stromschiene (180) verbunden ist, **dadurch gekennzeichnet, dass** mindestens eine der Sekundärbatterien (100, 200) eine Sekundärbatterie eines der Ansprüche 1 bis 13 ist.

14. Das Sekundärbatteriemodul (10) des Anspruchs 13, **dadurch gekennzeichnet, dass** die Stromschiene (180) aus dem ersten Material gebildet ist.

## Revendications

1. Batterie secondaire (100) comprenant un ensemble d'électrodes (150) et une borne (140) qui est reliée électriquement à l'ensemble d'électrodes (150), où la borne (140) est munie d'une plaque à bornes (144), qui comprend une première partie (144a) et une deuxième partie (144b), où la première partie (144a) est formée d'un premier matériau et la deuxième partie (144b) est formée d'un deuxième matériau qui diffère du premier matériau, et où un isolateur (170) est agencé entre la plaque à bornes (144) et une plaque de capuchon (120) de la batterie (100), **caractérisée en ce qu'**un écart (172) est formé entre la plaque à bornes (144) et l'isolateur (170).

2. Batterie secondaire (100) de la revendication 1, **caractérisée en ce que** la première partie (144a) et la deuxième partie (144b) viennent en butée, au moins dans certaines parties, contre un plan de contact.

3. Batterie secondaire (100) de la revendication 1 ou 2, **caractérisée en ce que** la deuxième partie (144b) comprend un élément de guidage (146).

4. Batterie secondaire (200) de la revendication 3, **caractérisée en ce que** la deuxième partie (244b) comprend l'élément de guidage (246) et une protubérance (247) qui est prévue à une distance de l'élément de guidage (246), l'élément de guidage (246) et la protubérance (247) s'étendant dans la même direction.

5. Batterie secondaire (200) de la revendication 4, **caractérisée en ce que** l'élément de guidage (246) et la protubérance (247) sont formés du même matériau.

6. Batterie secondaire (100) de l'une des revendications 1 à 5, **caractérisée en ce que** la borne (140) comprend un collecteur (142) qui relie la plaque à bornes (144) et l'ensemble d'électrodes (150) entre eux, où la première partie (144a) de la plaque à bornes (144) et le collecteur (142) sont formés du même matériau.

7. Batterie secondaire (100) de l'une des revendications 1 à 6, **caractérisée en ce que** la batterie (100) comprend une autre borne (130), dont la plaque à bornes (134) est formée du premier matériau.

8. Batterie secondaire (100) de la revendication 7, **caractérisée en ce qu'**un isolateur (160) est agencé entre l'autre plaque à bornes (134) et la plaque de capuchon (120) de la batterie (100), où un écart (162) est formé entre l'autre plaque à bornes (134) et l'isolateur (160).

9. Batterie secondaire (100) de la revendication 7 ou 8, **caractérisée en ce que** la plaque à bornes (134) de l'autre borne (130) comprend un élément de guidage (136).

10. Batterie secondaire (200) de la revendication 9, **caractérisée en ce que** la plaque à bornes (234) de l'autre borne (230) comprend l'élément de guidage (236) et une protubérance (237) qui est prévue à une distance de l'élément de guidage (236), l'élément de guidage (236) et la protubérance (237) s'étendant dans la même direction.

11. Batterie secondaire (200) de la revendication 10, **caractérisée en ce que** l'autre borne (230), l'élément de guidage (236) et la protubérance (237) sont formés du même matériau.

12. Batterie secondaire (100) de l'une des revendications 7 à 11, **caractérisée en ce que** l'autre borne (130) comprend un collecteur (132) qui relie la plaque à bornes (134) et l'ensemble d'électrodes (150) entre eux, où la plaque à bornes (134) et le collecteur (132) sont formés du même matériau.

13. Module de batterie secondaire (10) comprenant une pluralité de batteries secondaires (100, 200), où une borne (130, 140, 230, 240) de l'une des batteries secondaires (100, 200) est reliée à une borne (130, 140, 230, 240) d'une autre des batteries secondaires (100, 200) qui est adjacente à l'une des batteries secondaires (100, 200) par une barre omnibus (180), **caractérisé en ce qu'**au moins l'une des batteries secondaires (100, 200) est une batterie secondaire de l'une des revendications 1 à 13.

14. Module de batterie secondaire (10) de la revendication 13, **caractérisé en ce que** la barre omnibus (180) est formée du premier matériau.
